# EUROPEAN PATENT APPLICATION

(11) **EP 4 614 795 A1**
(43) Date of publication of application: **10.09.2025**
(21) Application number: 24190068.7
(22) Date of filing: 22.07.2024
(51) Int. Cl.: H02M 7/5387, H02M 1/00, H02M 1/42, H02M 3/335, H02J 5/00, H02J 9/06, H05G 1/12

(54) **A POWER SUPPLY SYSTEM AND AN ELECTRONIC DEVICE**

(30) Priority: 06.03.2024 CN 202410257621
(71) Applicant: Hunan Megmeet Electrical Technology Co., Ltd, Changsha Hunan Province 410141 (CN)
(72) Inventor: LI, Xiaobing, Changsha, 410141 (CN); GAO, Yun, Changsha, 410141 (CN)
(74) Representative: Gong, Jinping

(57) **Abstract**

The application discloses a power supply system and an electronic device. The power supply system comprises a rectifying circuit module, a DC connecting bus module and a voltage output circuit module. The rectifying circuit module is connected with an external power supply to correct and rectify the AC current of the external power supply to form a DC current; the DC connecting bus module is connected with the rectifying circuit module to store the DC current and output a DC voltage; the voltage output circuit module is connected with the DC connecting bus module to convert the DC voltage of the DC connecting bus module to at least any of a three-phase AC voltage, a single-phase AC voltage and a target DC voltage and output it. The power supply system in the application takes the DC connecting bus module as a transfer module to ensure stability and regulation of AC voltage and/or DC voltage outputted by the voltage output circuit module without the influence of fluctuation on the AC side of the rectifying circuit module.

## Description

### TECHNICAL FIELD

This application relates to a power supply technical field, in particular to a power supply system and an electronic device.

### TECHNICAL BACKGROUND

With the development of power electronic devices and their control technologies, the requirements of electronic devices for the quality of input power and the stability of voltage of the power supply system become higher.

As for electronic devices, taking medical devices as an example, medical imaging devices are applied to obtaining images of human tissues in the medical field. It comprises many subsystems that require different types and levels of voltage, including AC voltage, DC voltage, high voltage, low voltage, constant voltage, gradient voltage, etc. In addition, the power supply systems of medical imaging devices are also required to process many voltage levels and frequencies in different geographical regions.

In the prior art, to meet the above mentioned requirements, the power supply systems of traditional medical imaging devices shall be regulated to match different input voltage levels and frequencies (such as voltage standards in different countries and 50Hz or 60Hz). Such transformers often need many input taps and the iron core materials shall match with different voltages and frequencies, which inevitably causes inconvenience and unnecessary wastes to system design. In addition, due to the lack of effective feedback regulation control mechanisms, the output voltage (AC or DC) of this power supply system based on traditional power transformers fluctuates with changes in the input voltage, causing adverse effects on medical imaging devices.

### SUMMARY OF THE DISCLOSURE

This application proposes a power supply system and an electronic device with a view to solving above problems.

To solve above technical problems, this application proposes a technical scheme that is a power supply system which comprises a rectifying circuit module, a DC connecting bus module and a voltage output circuit module. The rectifying circuit module is connected with an external power supply to correct and rectify the AC current of the external power supply to form a DC current; the DC connecting bus module is connected with the rectifying circuit module to store the DC current and output a DC voltage; the voltage output circuit module is connected with the DC connecting bus module to convert the DC voltage of the DC connecting bus module to at least any of a three-phase AC voltage, a single-phase AC voltage and a target DC voltage and output it.

Wherein, the DC connecting bus module comprises a DC connecting bus and an input interface of the external power supply; the DC connecting bus is connected with the rectifying circuit module and the voltage output circuit module to store the DC current and output a DC voltage; the input interface of the external power supply is connected with the DC connecting bus to connect with other external DC power supply.

Wherein, the rectifying circuit module comprises a three-phase power factor correction circuit and a control circuit; the three-phase power factor correction circuit corrects and rectifies the AC current of the external power supply to form a DC current; the control circuit is connected with the three-phase power factor correction circuit to realize the control of the three-phase power factor correction circuit by digital signal processing method.

Wherein, the voltage output circuit module comprises a three-phase AC voltage output module, a single-phase AC voltage output module and a DC voltage output module; the three-phase AC voltage output module is connected with the DC connecting bus module to convert the DC voltage to a three-phase AC voltage and output it; the single-phase AC voltage output module is connected with the DC connecting bus module to convert the DC voltage to a single-phase AC voltage and output it; the DC voltage output module is connected with the DC connecting bus module to convert the DC voltage to a target DC voltage and output it.

Wherein, the DC connecting bus module comprises the first DC connecting bus, the second DC connecting bus and an input interface of the external power supply, and the rectifying circuit module comprises the first three-phase power factor correction circuit, the second three-phase power factor correction circuit and a control circuit; the first three-phase power factor correction circuit is connected with the first DC connecting bus, and the three-phase AC voltage output module and the single-phase AC voltage output module are connected with the first DC connecting bus; the second three-phase power factor correction circuit is connected with the second DC connecting bus and the DC voltage output module is connected with the second DC connecting bus.

Wherein, the three-phase AC voltage output module comprises a three-phase DC to AC converter, the first AC filter and a three-phase AC output circuit; the three-phase DC to AC converter is connected with the DC connecting bus to convert the DC voltage of the DC connecting bus to a three-phase AC voltage; the first AC filter is connected with the three-phase DC to AC converter to filter the three-phase AC voltage; the three-phase AC output circuit is connected with the first AC filter to output the three-phase AC voltage.

Wherein, the single-phase AC voltage output module comprises a single-phase DC to AC converter, the second AC filter and a single-phase AC output circuit; the single-phase DC to AC converter is connected with the DC connecting bus to convert the DC voltage of the DC connecting bus to a single-phase AC voltage; the second AC filter is connected with the single-phase DC to AC converter to filter the single-phase AC voltage; the single-phase AC output circuit is connected with the second AC filter to output a single-phase AC voltage.

Wherein, the DC voltage output module comprises a DC to DC converter, a DC filter and a DC output circuit; the DC to DC converter is connected with the DC connecting bus to convert the DC voltage of the DC connecting bus to a target DC voltage; the DC filter is connected with the DC to DC converter to filter the target DC voltage; the DC output circuit is connected with the DC filter to output the target DC voltage.

Wherein, the power supply system also comprises an AC input and protection circuit module which comprises an AC input sub-module, an isolation switch sub-module, a surge protection sub-module, an electromagnetic interference sub-module and an input current limiting sub-module; the AC input sub-module is connected with the external power supply to receive the AC input of the external power supply; the isolation switch sub-module is connected with the AC input sub-module to protect the power supply system to operate normally; the surge protection sub-module is connected with the isolation switch sub-module to prevent the damage caused by the surge voltage or current of the external power supply; the electromagnetic interference sub-module is connected with the surge protection sub-module to suppress electromagnetic interference; the input current limiting sub-module is connected with the electromagnetic interference sub-module to limit the AC current of the external power supply.

Wherein, the power supply system also comprises a DC/DC HF isolation transformer module which is connected with the DC connecting bus module and the voltage output circuit module to regulate the DC voltage of the DC connecting bus module to the DC voltage level required by the voltage output circuit module.

Wherein, the power supply system also comprises an output monitoring module and a grounding failure protection module; the output monitoring module is connected with the DC/DC HF isolation transformer module to monitor the voltage and current outputted by the DC/DC HF isolation transformer module and the grounding failure protection module is connected with the voltage output circuit module to monitor the grounding failure of the DC voltage outputted by the voltage output circuit module.

Wherein, the power supply system also comprises a central protection and failure monitoring processing module which comprises a central management sub-module and an external communication interface. The central management sub-module is used to monitor the status and safety of the power supply system in real time and quickly and accurately execute protection tasks in a failure; the external communication interface is connected with the central management sub-module to realize the communication between the central management sub-module and the external device.

Wherein, the power supply system also comprises an internal auxiliary power module which is connected with the central management sub-module to provide a safe internal power guarantee to the central management sub-module.

To solve above technical problems, this application discloses a technical scheme that is an electronic device which comprises any power supply system mentioned above.

The beneficial effects of this application are as follows: different from the prior art, the power supply system in this application comprises a rectifying circuit module, a DC connecting bus module and a voltage output circuit module; the rectifying circuit module is connected with an external power supply to correct and rectify the AC current of the external power supply to form a DC current; the DC connecting bus module is connected with the rectifying circuit module to store the DC current and output a DC voltage; the voltage output circuit module is connected with the DC connecting bus module to convert the DC voltage of the DC connecting bus module to at least any of a three-phase AC voltage, a single-phase AC voltage and a target DC voltage and output it. The power supply system in this application takes the DC connecting bus module as a transfer module to ensure stability and regulation of AC voltage and/or DC voltage outputted by the voltage output circuit module without the influence of fluctuation on the AC side of the rectifying circuit module. In addition, in the application, the voltage output circuit module converts the DC voltage of the DC connecting bus module to AC voltage and/or DC voltage, can replace the multiple-tap structure of traditional power supply systems and can save costs.

### BRIEF DESCRIPTION OF THE DRAWINGS

The following figures are included in the specification and constitute a part of the specification. These figures show the embodiments in line with this application and are attached to the specification to describe the technical scheme of this application.
FIG. 1 illustrates a structure schematic diagram of the first embodiment of the power supply system in this application;
FIG. 2 illustrates a structure schematic diagram of the second embodiment of the power supply system in this application;
FIG. 3 illustrates a circuit structure schematic diagram of the first embodiment of the three-phase power factor correction circuit in this application;
FIG. 4 illustrates a circuit structure schematic diagram of the second embodiment of the three-phase power factor correction circuit in this application;
FIG. 5 illustrates a circuit structure schematic diagram of the third embodiment of the three-phase power factor correction circuit in this application;
FIG. 6 illustrates a circuit structure schematic diagram of the first embodiment of the three-phase DC to AC converter in this application;
FIG. 7 illustrates a circuit structure schematic diagram of the second embodiment of the three-phase DC to AC converter in this application;
FIG. 8 illustrates a circuit structure schematic diagram of the third embodiment of the three-phase DC to AC converter in this application;
FIG. 9 illustrates a circuit structure schematic diagram of the first embodiment of the single-phase DC to AC converter in this application;
FIG. 10 illustrates a circuit structure schematic diagram of the second embodiment of the single-phase DC to AC converter in this application;
FIG. 11 illustrates a circuit structure schematic diagram of the third embodiment of the single-phase DC to AC converter in this application;
FIG. 12 illustrates a structure schematic diagram of the third embodiment of the power supply system in this embodiment;
FIG. 13 illustrates a circuit structure schematic diagram of the first embodiment of the DC/DC HF isolation transformer in this application;
FIG. 14 illustrates a circuit structure schematic diagram of the second embodiment of the DC/DC HF isolation transformer in this application;
FIG. 15 illustrates a circuit structure schematic diagram of the third embodiment of the DC/DC HF isolation transformer in this application;
FIG. 16 illustrates a structure schematic diagram of the fourth embodiment of the DC/DC HF isolation transformer in this application;
FIG. 17 illustrates a structure schematic diagram of an embodiment of the electronic device in this application.

Description of reference numerals: 100 - Power supply system; 10 - Rectifying circuit module; 11 - Three-phase power factor correction circuit; 12 - Control circuit; 13 - The first three-phase power factor correction circuit; 14 - The second three-phase power factor correction circuit; 20 - DC connecting bus module; 21 - DC connecting bus; 22 - Input interface of the external power supply; 23 - The first DC connecting bus; 24 - The second DC connecting bus; 30 - Voltage output circuit module, 31 - Three-phase AC voltage output module; 311 - Three-phase DC to AC converter; 312 - The first AC filter; 313 - Three-phase AC output circuit; 32 - Single-phase AC voltage output module; 321 - Single-phase DC to AC converter; 322 - The second AC filter; 323 - Single-phase AC output circuit; 33 - DC voltage output module; 331 - DC to DC converter; 332 - DC filter; 333 - DC output circuit; 40 - AC input and protection circuit module; 41 - AC input sub-module; 42 - Isolation switch sub-module; 43 - Surge protection sub-module; 44 - Electromagnetic interference sub-module; 45 - Input current limiting sub-module; 50 - DC/DC HF isolation transformer module; 60 - Output monitoring module; 70 - Grounding failure protection module; 80 - Central protection and failure monitoring processing module; 81 - Central management sub-module; 82 - External communication interface; 90 - Internal auxiliary power module; 200 - Electronic device.

### DETAILED DESCRIPTION

The embodiments of the technical scheme in this application will be detailed below with reference to drawings. The following embodiments are only presented to provide a clearer explanation of the technical scheme of this application, and are therefore only used as examples and cannot limit the scope of protection of this application.

Unless otherwise defined, all technical and scientific terms mentioned in this application contain the same meanings as those commonly understood by person skilled in the art of this application; the terms mentioned in this application are only provided for describing the specific embodiments and are not intended to limit this application; the terms "comprising" and "possessing" in the specification, claims and drawings in this application and any variations thereof are intended to cover non-exclusive inclusion.

In the description of embodiments in this application, the technical terms "the first", "the second", etc. are only intended to distinguish different objects, but are not regarded as the indication or implication of relative importance or the implied indication of the quantity, specific order or primary relationship of the indicated technical features. Among the description of embodiments in this application, the term "many" means more than two unless otherwise specified.

The "embodiment" in this application means that specific features, structures or characteristics described in conjunction with the embodiment can be included in at least one embodiment in this application. The embodiments in different positions in the specification are not necessarily referring to the same embodiment and are not independent or alternative embodiments from other embodiments. The persons skilled in the art explicitly and implicitly understand that embodiments mentioned in this application can be combined with other embodiments.

With the development of power electronic devices and their control technologies, the requirements of electronic devices for the quality of input power and the stability of voltage of the power supply system become higher.

As for electronic devices, taking medical devices as an example, medical imaging devices are applied to obtaining images of human tissues in the medical field. It comprises many subsystems that require different types and levels of voltage, including AC voltage, DC voltage, high voltage, low voltage, constant voltage, gradient voltage, etc. In addition, the power supply systems of medical imaging devices are also required to process many voltage levels and frequencies in different geographical regions and to provide the current isolation and protection equipment for loads and AC power supply to avoid being influenced by grounding failure.

In the prior art, to meet the above mentioned requirements, the power supply systems of traditional medical imaging devices shall be regulated to match different input voltage levels and frequencies (such as voltage standards in different countries and 50Hz or 60Hz). Such transformers often need many input taps and the iron core materials shall match with different voltages and frequencies, which inevitably causes inconvenience and unnecessary wastes to system design. In addition, due to the lack of effective feedback regulation control mechanisms, the output voltage (AC or DC) of this power supply system based on traditional power transformers fluctuates with changes in the input voltage, causing adverse effects on medical imaging devices.

Besides, the current power supply systems of medical devices also have other disadvantages, such as large volume, weight and no-load losses; the primary and secondary sides of the transformer of the power supply system are prone to be influenced by failures and interference, and unwanted characteristics on the input side (such as voltage drop) will be reflected in the output waveform; in addition, the frequency of the AC output voltage is constant and can not be regulated, therefore, the power supply system has no variable frequency speed regulation function.

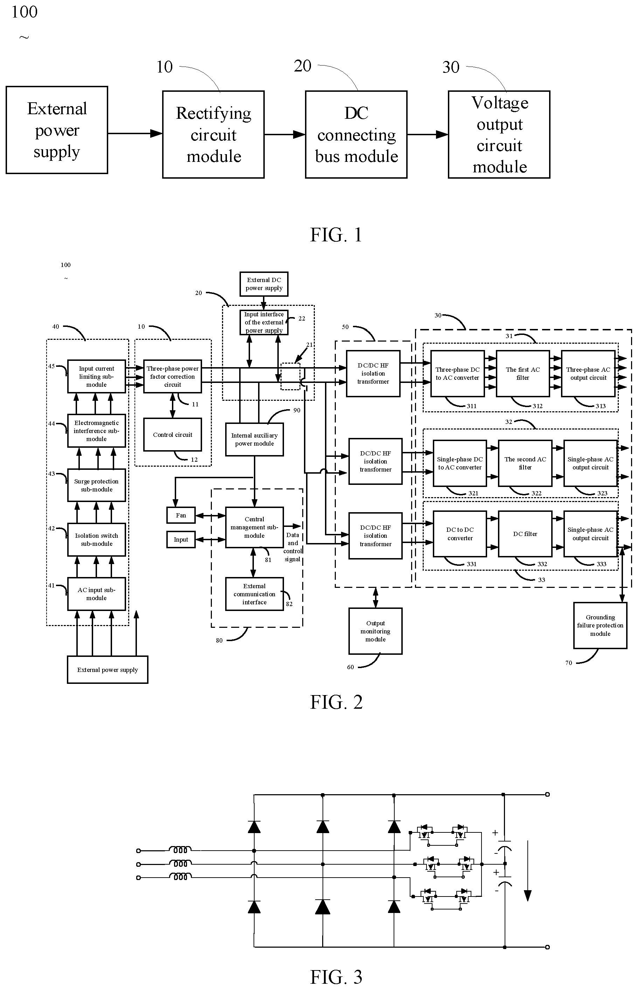

To solve above problems, this application firstly proposes a power supply system. Please refer to FIG. 1. FIG. 1 illustrates a structure schematic diagram of the first embodiment of the power supply system in this application. As shown in FIG. 1, in this embodiment, the power supply system 100 comprises a rectifying circuit module 10, a DC connecting bus module 20 and a voltage output circuit module 30.

As shown in FIG. 1, the rectifying circuit module 10 is connected with an external power supply to correct and rectify the AC current of the external power supply to form a DC current; the DC connecting bus module 20 is connected with the rectifying circuit module 10 to store the DC current and output a DC voltage; the voltage output circuit module 30 is connected with the DC connecting bus module 20 to convert the DC voltage of the DC connecting bus module 20 to at least any of a three-phase AC voltage, a single-phase AC voltage and a target DC voltage and output it.

In this embodiment, the rectifying circuit module 10 can comprises a three-phase power factor correction circuit which comprises a three-phase rectifying circuit module and an active power factor correction circuit. This circuit plays three roles in this embodiment. The first role is to rectify the three-phase AC of the external power supply to DC, form a DC bus and regulate and control the bus voltage. The second role is to correct the input current on the AC side of the external power supply to be close to sine so as to improve the power factor. The third role is that in the case of asymmetric three-phase input from the external power supply, a phase locked loop in the rectifying circuit module 10 can decompose the positive and negative orders of the three-phase input voltage to ensure that the current contains no negative order components and to improve power quality.

The DC connecting bus module 20 comprises a DC connecting bus which can be regarded as a connection link of input and output of the whole power supply system 100 of the embodiment, as a transfer station, a buffer zone or a reservoir for energy conversion and as a public interface of the power supply system 100.

In this embodiment, the voltage output circuit module 30 comprises at least any of a three-phase AC voltage output module, a single-phase AC voltage output module and a DC voltage output module. The three-phase AC voltage output module mainly modulates and converts the DC voltage to a three-phase AC voltage; the single-phase AC voltage output module mainly modulates and converts the DC voltage to a single-phase AC voltage; the DC voltage output module mainly converts the DC voltage to a target DC voltage further so as to accurately output the target DC voltage.

Different from the prior art, the power supply system 100 in this application comprises a rectifying circuit module 10, a DC connecting bus module 20 and a voltage output circuit module 30. The rectifying circuit module 10 is connected with an external power supply to correct and rectify the AC current of the external power supply to form a DC current; the DC connecting bus module 20 is connected with the rectifying circuit module 10 to store the DC current and output a DC voltage; the voltage output circuit module 30 is connected with the DC connecting bus module 20 to convert the DC voltage of the DC connecting bus module 20 to at least any of a three-phase AC voltage, a single-phase AC voltage and a target DC voltage and output it. The power supply system 100 in this application takes the DC connecting bus module 20 as the transfer module to ensure stability and regulation of AC voltage and/or DC voltage outputted by the voltage output circuit module 30 without the influence of fluctuation on the AC side of the rectifying circuit module 10. In addition, in the application, the voltage output circuit module 30 converts the DC voltage of the DC connecting bus module 20 to AC voltage and/or DC voltage, can replace the multiple-tap structure of traditional power supply systems and can save costs.

In some embodiments, refer to FIG. 2. FIG. 2 illustrates a structure schematic diagram of the second embodiment of the power supply system in this application. As shown in FIG. 2, the DC connecting bus module 20 in the embodiment comprises a DC connecting bus 21 and an input interface of the external power supply 22. The DC connecting bus 21 is connected with the rectifying circuit module 10 and the voltage output circuit module 30 to store the DC current and output a DC voltage; the input interface of the external power supply 22 is connected with the DC connecting bus 21 to connect with other external DC power supply.

Wherein, in this embodiment, the DC connecting bus module 20 is set with the input interface of the external power supply 22 to easily access to any other external DC power supply or load directly or indirectly so as to provide more power selection and redundant design. In addition, other external DC power supply can be accessed by the input interface of the external power supply 22. The DC connecting bus 21 can easily convert to the required power output type. In theory, the input interface of the external power supply 22 can couple any DC power supply, DC load and energy storage device, such as photovoltaic solar energy, energy storage capacitors and battery modules. In this way, other power supply forms besides AC power grid can be provided to achieve the mobility of the power supply system 100.

In this embodiment, the DC connecting bus 21 is set as the connection link of input and output of the power supply system 100, so the AC voltage and/or DC voltage outputted by the voltage output circuit module 30 can be stabilized and regulated in a convenient way without the influence of fluctuation on the AC side, such as asymmetric changes in input voltage, voltage drop or frequency instability. However, in this embodiment, all outputs are regulated and converted from DC voltage by the DC bus. The voltage of the DC bus is stabilized at a constant value by control. No matter how the peak and frequency of the input voltage change, the AC voltage and/or DC voltage outputted by the voltage output circuit module 30 can be stabilized and regulated by feedback control conversion with higher precision and more stable output. The output of traditional power supply systems varies with input fluctuations. The power supply system 100 in this application has advantages over traditional power supply systems because of its relative isolation and independent control of input and output.

In some embodiments, as shown in FIG. 2, in this embodiment, the rectifying circuit module 10 comprises a three-phase power factor correction circuit 11 and a control circuit 12. The three-phase power factor correction circuit 11 is provided to correct and rectify the AC current of the external power supply to form a DC current; the control circuit 12 is connected with the three-phase power factor correction circuit 11 to realize the control of the three-phase power factor correction circuit 11 by digital signal processing method.

As mentioned above, the three-phase power factor correction circuit 11 can not only correct and rectify the AC current of the external power supply to form a DC current, but also correct the input current on the AC side of the external power supply to be close to sine so as to improve the power factor. In addition, in the case of asymmetric three-phase input from the external power supply, a phase locked loop in the three-phase power factor correction circuit 11 can decompose the positive and negative orders of the three-phase input voltage to ensure that the current contains no negative order components and to improve power quality.

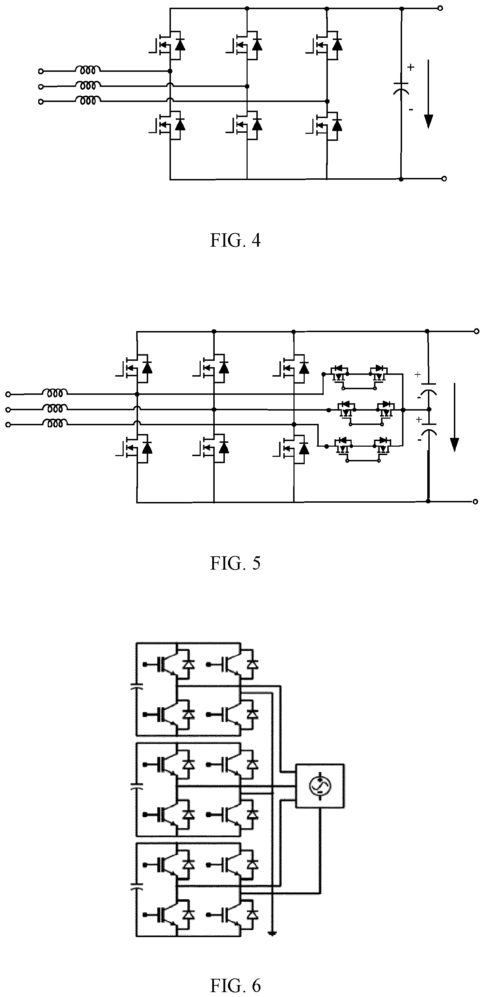

Wherein, refer to FIG. 3 to FIG. 5. FIG. 3 illustrates a circuit structure schematic diagram of the first embodiment of the three-phase power factor correction circuit in this application. FIG. 4 illustrates a circuit structure schematic diagram of the second embodiment of the three-phase power factor correction circuit in this application. FIG. 5 illustrates a circuit structure schematic diagram of the third embodiment of the three-phase power factor correction circuit in this application. In this embodiment, the three-phase power factor correction circuit 11 can be set as a circuit topological structure of any structure in FIG. 3 to FIG. 5. In other embodiments, the three-phase power factor correction circuit 11 can be set as other circuit topological structures on the premise of having above functions, with no more restrictions here.

In this embodiment, although the three-phase voltage input from an external power supply shows a sinusoidal waveform, the input current waveform is non sinusoidal due to rectification or non-linear loads. The power factor is very low. The power supply system 100 in this embodiment is set with the three-phase power factor correction circuit 11 to correct the input current waveform to be close to sine and in phase with voltage, which greatly improves the power factor to close to 1. That is to say, the three-phase power factor correction circuit 11 in this embodiment has both the function of converting AC to DC and stepping up and the function of correcting power factor. Although the three-phase voltage is sinusoidal, the three-phase input current may not be sinusoidal, which is caused by the different load types. Anyway, the control algorithms, such as phase locked loop and regulation methods, make the input current infinitely close to sine and in phase with voltage waveform. In this way, the power factor is close to 1 so as to achieve the purpose of correcting the power factor. Especially, in the case of asymmetric three-phase input voltage, the positive and negative order decomposition algorithm of the phase locked loop can ensure that the input current only has the positive order in-phase sine waveform and has no negative order component to further guarantee the correction of power factor.

In some embodiments, as shown in FIG. 2, in this embodiment, the voltage output circuit module 30 comprises a three-phase AC voltage output module 31, a single-phase AC voltage output module 32 and a DC voltage output module 33. The three-phase AC voltage output module 31 is connected with the DC connecting bus module 20 to convert the DC voltage to a three-phase AC voltage and output it; the single-phase AC voltage output module 32 is connected with the DC connecting bus module 20 to convert the DC voltage to a single-phase AC voltage and output it; the DC voltage output module 33 is connected with the DC connecting bus module 20 to convert the DV voltage to a target DC voltage and output it.

As mentioned above, the three-phase AC voltage output module 31 mainly regulates and converts the DC voltage to a three-phase AC voltage and provides a true neutral wire to meet the requirements of an effective grounding system. This part also has a voltage regulation and frequency feedback control function to accurately output the desired AC voltage; the single-phase AC voltage output module 32 mainly regulates and converts the DC voltage to a single-phase AC voltage. This part also comprises voltage regulation and frequency feedback control function to accurately output the desired AC voltage; in this embodiment, the DC voltage output module 33 can be set with the second level DC to DC conversion. According to specific situation, the DC voltage output module 33 can be isolated or non-isolated. Its main function is to further convert the DC voltage to a target DC voltage. This part also has the voltage regulation feedback control function to accurately output a target DC voltage.

In other embodiments, the voltage output circuit module 30 can comprises at least any of a three-phase AC voltage output module 31, a single-phase AC voltage output module 32 and a DC voltage output module 33. That is to say, the voltage output circuit module 30 can be set based on the actual voltage. For example, if only AC voltage is needed, the voltage output circuit module 30 can only comprise a three-phase AC voltage output module 31 and a single-phase AC voltage output module 32; if only DC voltage is needed, the voltage output circuit module 30 can only comprise a DC voltage output module 33.

In some embodiments, as shown in FIG. 2, in this embodiment, the three-phase AC voltage output module 31 comprises a three-phase DC to AC converter 311, the first AC filter 312 and a three-phase AC output circuit 313. The three-phase DC to AC converter 311 is connected with the DC connecting bus 21 to convert the DC voltage of the DC connecting bus 21 to a three-phase AC voltage; the first AC filter 312 is connected with the three-phase DC to AC converter to filter the three-phase AC voltage; the three-phase AC output circuit 313 is connected with the first AC filter 312 to output the three-phase AC voltage.

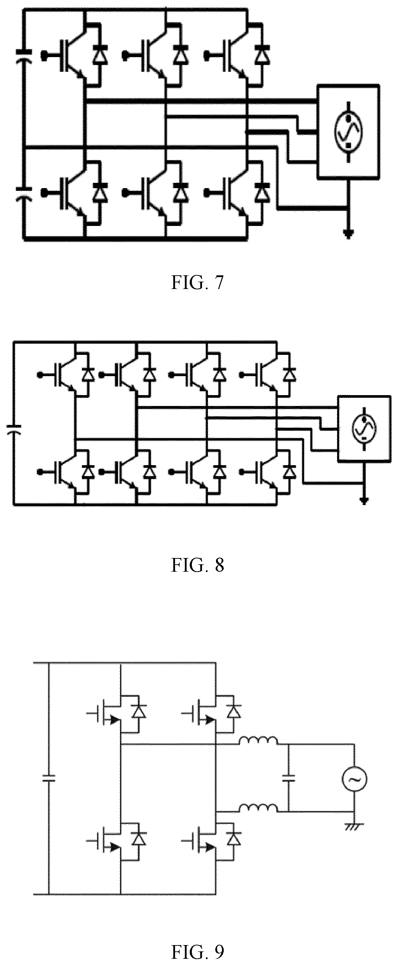

Wherein, in this embodiment, refer to FIG. 6 to FIG. 8. FIG. 6 illustrates a circuit structure schematic diagram of the first embodiment of the three-phase DC to AC converter in this application; FIG. 7 illustrates a circuit structure schematic diagram of the second embodiment of the three-phase DC to AC converter in this application; FIG. 8 illustrates a circuit structure schematic diagram of the third embodiment of the three-phase DC to AC converter in this application. In this embodiment, the three-phase DC to AC converter can be set as the circuit topological structure of any structure in FIG. 6 to FIG. 8. Wherein, if the three-phase DC to AC converter 311 is set as the three-phase four-wire DC to AC converter in FIG. 8, it can provide a true neutral wire to realize the effective grounding protection function. In other embodiments, the three-phase DC to AC converter 311 can be set as other circuit topological structures on the premise of having above functions, with no more restrictions here.

In this embodiment, the three-phase DC to AC converter 311 is preferably set as a three-phase four-wire DC to AC converter which can effectively ground the system and copy with nonlinear and three-phase unbalanced loads. In the case of a single-phase grounding failure, the voltage of the other two phases will not increase to affect safety, the failure can be accurately judged and the phase can be quickly cut. In general, the traditional three-phase DC to AC converter 311 has three wires and has no neutral wire. In the case of a single-phase grounding failure, the phase voltage of a certain phase becomes zero and the phase voltage of other two phases also changes so that the voltage between phases is unchanged. Due to lack of a neutral wire, the measured voltage is the phase voltage of three phases. In such case, it is impossible to judge whether there is a single-phase grounding failure from the perspective of the voltage. The power supply system 100 can continue to operate, but an increase in phase voltage of other two phases can cause injury to operators and damage to device insulation. Therefore, the preferred configuration of the three-phase DC to AC converter 311 as a three-phase four-wire DC to AC converter to avoid any injury to operators and damage to device insulation. In addition, whether measuring the wire voltage or phase voltage of three phases, combined with current measurement, it is easy to judge the specific phase in failure, thus meeting the effective grounding requirements of the power supply system 100.

In addition, if the three-phase DC to AC converter 311 is preferably set as a three-phase four-wire DC to AC converter, in this embodiment, the same effective grounding can be achieved by installing the fourth controllable switch arm to independently control the balance of midpoint voltage on the DC side through regulation. In the case of single-phase grounding failure, it plays the same effective grounding role as traditional power supply system 100. Besides, if the three-phase loads are imbalanced, the neutral wire can bear this imbalanced zero sequence current to guarantee normal work of the three-phase inverter.

In this embodiment, the three-phase AC output circuit 313 is also set with proper measurement and feedback control device to easily realize the AC variable frequency speed regulation function, directly drive the three-phase induction motor, and realize soft start, speed control, constant torque control, constant power control, etc.

In some embodiments, as shown in FIG. 2, in this embodiment, the single-phase AC voltage output module 32 comprises a single-phase DC to AC converter 321, the second AC filter 322 and a single-phase AC output circuit 323. The single-phase DC to AC converter 321 is connected with the DC connecting bus 21 to convert the DC voltage of the DC connecting bus 21 to a single-phase AC voltage; the second AC filter 322 is connected with the single-phase DC to AC converter to filter the single-phase AC voltage; the single-phase AC output circuit 323 is connected with the second AC filter 322 to output a single-phase AC voltage.

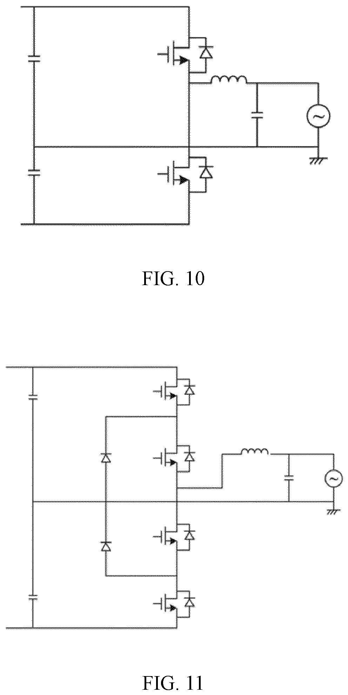

Wherein, in this embodiment, refer to FIG. 9 FIG. 11. FIG. 9 illustrates a circuit structure schematic diagram of the first embodiment of the single-phase DC to AC converter in this application; FIG. 10 illustrates a circuit structure schematic diagram of the second embodiment of the single-phase DC to AC converter in this application; FIG. 11 illustrates a circuit structure schematic diagram of the third embodiment of the single-phase DC to AC converter in this application. In this embodiment, the single-phase DC to AC converter 321 can be set as a circuit topological structure of any structure in FIG. 9 FIG. 11. In other embodiments, the single-phase DC to AC converter 321 can be set as other circuit topological structures, such as the single-phase H5 inverter or single-phase H6 inverter. In addition, cascade or parallel connection can be used to increase the voltage grade and power output. To sum up, the single-phase DC to AC converter 321 only shall have above functions, with no more restrictions here.

In this embodiment, the single-phase AC output circuit 323 is also set with proper measurement and feedback control device to quickly and accurately output the desired single-phase AC voltage.

In some embodiments, as shown in FIG. 2, in this embodiment, the DC voltage output module 33 comprises a DC to DC converter 331, a DC filter 332 and a DC output circuit 333. The DC to DC converter 331 is connected with the DC connecting bus 21 to convert the DC voltage of the DC connecting bus 21 to a target DC voltage; the DC filter 332 is connected with the DC to DC converter 331 to filter the target DC voltage; the DC output circuit 333 is connected with the DC filter 332 to output the target DC voltage.

In this embodiment, as mentioned above, the DC to DC converter 331 can be known as the second-level DC voltage control. Wherein, in this embodiment, the DC output circuit 333 is also set with proper measurement and feedback control devices to obtain a target DC voltage in a faster and more accurate way.

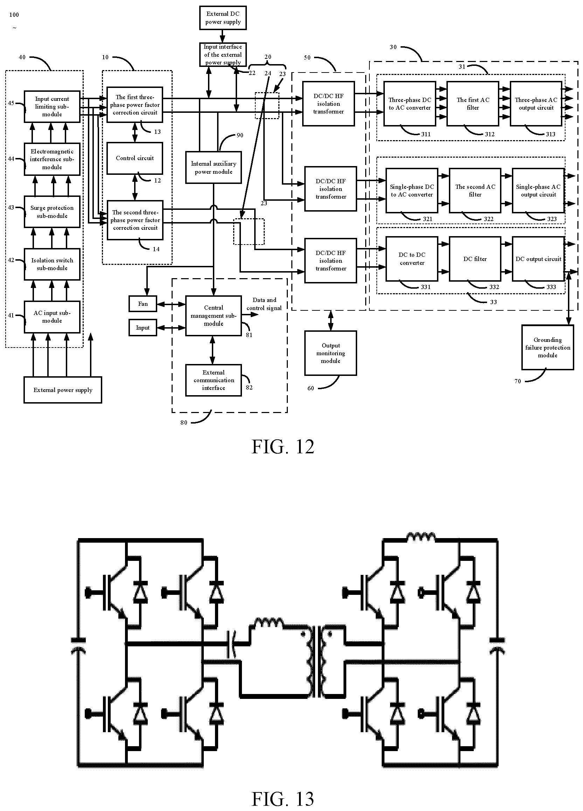

In some embodiments, refer to FIG. 12. FIG. 12 illustrates a structure schematic diagram of the third embodiment of the power supply system in this embodiment. In this embodiment, different from the embodiment in FIG. 2, the three-phase AC voltage output module 31 and the single-phase AC voltage output module 32 in this embodiment share the first DC connecting bus 23 and the first three-phase power factor correction circuit 13; the DC voltage output module 33 is set with the independent second DC connecting bus 24 and the second three-phase power factor correction circuit 14.

As shown in FIG. 12, the DC connecting bus module 20 comprises the first DC connecting bus 23, the second DC connecting bus 24 and an input interface of the external power supply 22. The rectifying circuit module 10 comprises the first three-phase power factor correction circuit 13, the second three-phase power factor correction circuit 14 and a control circuit 12. The first three-phase power factor correction circuit 13 is connected with the first DC connecting bus 23 and the three-phase AC voltage output module 31 and the single-phase AC voltage output module 32 are connected with the first DC connecting bus 23; the second three-phase power factor correction circuit 14 is connected with the DC connecting bus 24; the DC voltage output module 33 is connected with the second DC connecting bus 24.

Wherein, both the first three-phase power factor correction circuit 13 and the second three-phase power factor correction circuit 14 are connected with the control circuit 12 and are controlled by the control circuit 12. In this embodiment, the control circuit 12 can be set as the DSP control circuit 12. The DSP control circuit 12 is a circuit that utilizes digital signal processing methods to control electronic devices or systems and a microprocessor for fast mathematical operations and algorithm execution. It is widely used in various electronic systems, including but not limited to switch power control, internal effector of audio equipment such as mixing consoles, communication equipment and industrial control systems.

In addition, as shown in FIG. 2, the DC/DC HF isolation transformer module 50 is set between the DC connecting bus module 20 and the DC voltage output module 33 of the power supply system 100. The DC/DC HF isolation transformer module 50 can regulate the DC voltage of the DC connecting bus module 20 to the DC voltage level required by the voltage output circuit module 30. In this embodiment, as shown in FIG. 12, because the DC voltage output module 33 is set with the independent second DC connecting bus 24 and the second three-phase power factor correction circuit 14, the DC to DC converter 331 in the DC voltage output module 33 can be omitted. The DC/DC HF isolation transformer module 50 can directly convert the DC voltage of the DC connecting bus module 20 to a DC voltage level required by the DC voltage output module 33 without the need of setting the DC to DC converter 331 to realize the second-level DC voltage conversion.

Compared with the power supply system 100 in the embodiment in FIG. 2, in this embodiment, the AC voltage output module and the DC voltage output module 33 are relatively independent and can be installed and replaced in an easier way.

In some embodiments, refer to FIG. 2 and FIG. 12. Based on above embodiments, in this embodiment, as shown in FIG. 2 and FIG. 12, the power supply system 100 also comprises an AC input and protection circuit module 40 which comprises an AC input sub-module 41, an isolation switch sub-module 42, a surge protection sub-module 43, an electromagnetic interference sub-module 44, and an input current limiting sub-module 45. The AC input sub-module 41 is connected with the external power supply to receive the AC input of the external power supply; the isolation switch sub-module 42 is connected with the AC input sub-module 41 to protect the power supply system 100 to operate normally; the surge protection sub-module 43 is connected with the isolation switch sub-module 42 to prevent the damage caused by the surge voltage or current of the external power supply; the electromagnetic interference sub-module 44 is connected with the surge protection sub-module 43 to suppress electromagnetic interference; the input current limiting sub-module 45 is connected with the electromagnetic interference sub-module 44 to limit the AC current of the external power supply.

In this embodiment, the AC input and protection circuit module 40 plays the main role of adapting to global voltage levels by setting a single three-phase wide voltage input connector in the AC input and protection circuit module 40. In addition, the AC input and protection circuit module 40 is also set with a three-phase input voltage and current measurement and monitoring device to prevent many failures such as over-voltage, under-voltage, over-current and over-heat. The isolation switch sub-module 42 can quickly and safely disconnect the whole power supply system 100 in a failure. Besides, this module is also set with a surge protection sub-module 43, an electromagnetic interference sub-module 44 and an input current limiting sub-module 45 to prevent surge, surge current, and electromagnetic interference.

In some embodiments, as shown in FIG. 2 and FIG. 12, in this embodiment, the power supply system 100 also comprises a DC/DC HF isolation transformer module 50 which is connected with the DC connecting bus module 20 and the voltage output circuit module 30 to regulate the DC voltage of the DC connecting bus module 20 to a DC voltage level required by the voltage output circuit module 30.

In this embodiment, the DC/DC HF isolation transformer module mainly plays two roles. The first role is to isolate the primary and secondary edges with the HF transformer. The second role is to further regulate the DC bus voltage to a required DC voltage level. Wherein, in this embodiment, as shown in FIG. 2 and FIG. 12, the DC/DC HF isolation transformer module can be set with DC/DC HF isolation transformers with corresponding quantity for the three-phase AC voltage output module 31, the single-phase AC voltage output module 32 and the DC voltage output module 33. In other embodiments, it is also possible to set a DC/DC HF isolation transformer with primary edge and many secondary edges, with no more restrictions here.

In addition, in this embodiment, a DC/DC HF isolation transformer is set to reduce the dimension and weight of the isolation transformer. The required size of the iron core and winding of the isolation transformer greatly reduces. The size of the whole isolation transformer is inversely proportional to the frequency f. The relationship can be approximated as *Ac* × *Aw* ∝ *S*/(*Bm* × *J* × *f*). Wherein, S refers to the output apparent power, *Bm* refers to the peak magnetic flux density, J refers to the current density of a conductor, Ac refers to the core area and Aw refers to the window area. Therefore, the higher the frequency, the smaller the transformer. In this embodiment, the size of the isolation transformer is inversely proportional to its working frequency. If a 50Hz power frequency transformer operates at 50KHz, its volume can be reduced by 1000 times, that is, by 10 times in all dimensions, which can greatly reduce the volume and weight of the power supply system 100.

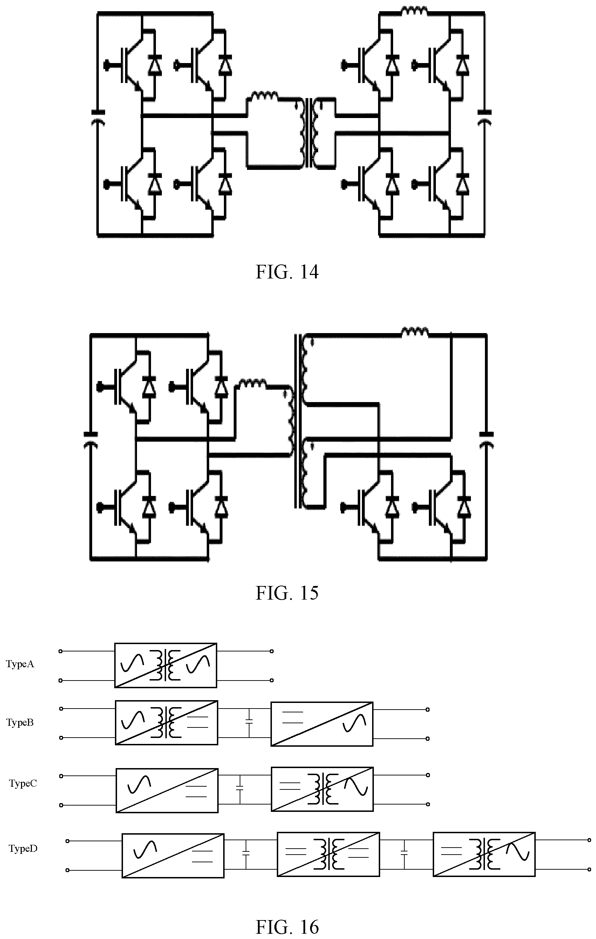

Wherein, in this embodiment, refer to FIG. 13 to FIG. 15. FIG. 13 illustrates a circuit structure schematic diagram of the first embodiment of the DC/DC HF isolation transformer in this application; FIG. 14 illustrates a circuit structure schematic diagram of the second embodiment of the DC/DC HF isolation transformer in this application; FIG. 15 illustrates a circuit structure schematic diagram of the third embodiment of the DC/DC HF isolation transformer in this application. In this embodiment, the DC/DC HF isolation transformer can be set as a circuit topological structure of any structure in FIG. 13 to FIG. 15. In other embodiments, the DC/DC HF isolation transformer also can have other topological forms, such as the dual active bridge DC/DC converter or the bidirectional current multiplication isolation converter. The DC/DC HF isolation transformer can increase the voltage grade and power output by cascade or parallel connection, with no more restrictions here.

In addition, refer to FIG. 16. FIG. 16 illustrates a structure schematic diagram of the fourth embodiment of the DC/DC HF isolation transformer in this application. As shown in FIG. 16, the DC/DC HF isolation transformer in this embodiment can be set as four topological structures. Wherein, Type A is a single-level structure, Type B and Type C are a two-level structure and Type D is a three-level structure. If the power supply system 100 is applied in medical devices, the DC/DC HF isolation transformer is preferably set as Type D. However, at a certain extent, Type A, Type B and Type C also can have the similar functions and realize the similar purposes, with no more restrictions here.

In some embodiments, as shown in FIG. 2 and FIG. 12, in this embodiment, the power supply system 100 also comprises an output monitoring module 60 and a grounding failure protection module 70. The output monitoring module 60 is connected with the DC/DC HF isolation transformer module 50 to monitor the voltage and current outputted by the DC/DC HF isolation transformer module 50 and the grounding failure protection module 70 is connected with the voltage output circuit module 30 to monitor the grounding failure of the voltage output circuit module 30.

In this embodiment, the output monitoring module 60 can monitor the output voltage and current in real time; the grounding failure protection module 70 is set with a protection switch circuit breaker. In addition, in other embodiments, the grounding failure protection module 70 also can be set with grounding failure monitor, leakage current protector, insulation detector, short circuit protector and overload protector, with no more restrictions here.

The traditional power supply system 100 is protected by logic hardware circuits composed of switch components such as circuit breakers, relays, contactors, and suction coils. These hardware circuits have protection of over-voltage, over-current, under-voltage, over-load, over-heat, current leakage, phase loss, short circuit and grounding failures. The detection and protection circuit are mechanical. Therefore, they are complicated and are difficult to be realized. In addition, the volume and weight are large and the costs are high. Compared with the traditional power supply system 100, this application takes the accurate measurement of voltage, current and temperature as basis, the traditional power supply system 100 realizes the protection functions by signal acquisition, central microprocessor logic processing and electronic control switches. It can be seen that the protection logic is realized by software, the logic circuit is greatly simplified, the execution mechanism is also more energy-efficient and compact, and is characterized by small volume, light weight and low costs.

In some embodiments, as shown in FIG. 2 and FIG. 12, in this embodiment, the power supply system 100 also comprises a central protection and failure monitoring processing module 80 which comprises a central management sub-module 81 and an external communication interface 82. The central management sub-module 81 is used to monitor the status and safety of the power supply system 100 in real time and quickly and accurately execute protection tasks in a failure; the external communication interface 82 is connected with the central management sub-module 81 to realize the communication between the central management sub-module 81 and the external device.

Wherein, in this embodiment, the central management sub-module 81 is independent from controllers for other power converters in the system, but is established with communication with these controllers to complete tasks. Besides the timing control for startup and shutdown, the central management sub-module 81 mainly monitors the status and safety of the whole power supply system 100 in real time and quickly and accurately executes protection tasks in a failure, such as input and output failures: over-voltage, over-current, under-voltage, under-current, over-load, over-heat, phase loss, grounding failure and short circuit. At this time, the external communication interface 82 can ensure that the central management sub-module 81 can quickly acquire the external instructions so as to improve the management efficiency of the power supply system 100.

In some embodiments, as shown in FIG. 2 and FIG. 12, in this embodiment, the power supply system 100 also comprises an internal auxiliary power module 90 which is connected with the central management sub-module 81 to provide a safe internal power guarantee to the central management sub-module 81.

In this embodiment, the internal auxiliary power module 90 mainly provides power supply to the central management sub-module 81, protects the normal work and provides a safe internal power guarantee. Particularly, it can work for a certain period in system power failure. Its safety requirement is higher than that of other power supplies. In addition, as shown in FIG. 2 and FIG. 12, the internal auxiliary power module 90 can be connected with the DC connecting bus 21. When the power supply system 100 works normally, the internal auxiliary power module 90 can be charged by DC voltage from the DC connecting bus 21.

Different from the prior art, the power supply system 100 in the application comprises a rectifying circuit module 10, a DC connecting bus module 20 and a voltage output circuit module 30. The rectifying circuit module 10 is connected with an external power supply to correct and rectify the AC current of the external power supply to form a DC current; the DC connecting bus module 20 is connected with the rectifying circuit module 10 to store the DC current and output a DC voltage; the voltage output circuit module 30 is connected with the DC connecting bus module 20 to convert the DC voltage of the DC connecting bus module 20 to at least any of a three-phase AC voltage, a single-phase AC voltage and a target DC voltage and output it. The power supply system 100 in the application takes the DC connecting bus module 20 as a transfer module to ensure stability and regulation of AC voltage and/or DC voltage outputted by the voltage output circuit module 30 without the influence of fluctuation on the AC side of the rectifying circuit module 10. In addition, in the application, the voltage output circuit module 30 converts the DC voltage of the DC connecting bus module 20 to AC voltage and/or DC voltage, can replace the multiple-tap structure of traditional power supply systems 100 and can save costs.

In addition, the power supply system 100 in this application is controlled by many levels. Every level is isolated and is set with failure protection and interference noise filtering processing function. The failures and interference on the input and output sides will not spread. For example, if there are harmonic components in the input voltage, the control algorithm will have corresponding current harmonic suppression functions. In addition, the DC connecting bus 21 will have a low pass filter network to remove the voltage harmonic components to provide a stable DC voltage to the latter level so as to isolate the interference. If there is a failure on the output side, the circuit will be in short circuit, the power supply in the later stage will actively limit the current or the circuit will be cut to avoid influence of the early state. If the output is nonlinear AC load and the output current is not sinusoidal, the three-phase power factor correction circuit 11 in the early stage can correct the input current waveform to a sine wave so as to ensure high power factor and improve power supply quality. Besides, the power supply system 100 in this application meets the requirement of leakage current less than 5mA and Class B conducted radiation. The application scope is wide. It can be used in medical devices.

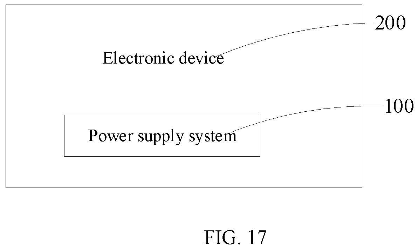

In some embodiments, this application further proposes an electronic device. Refer to FIG. 17. FIG. 17 illustrates a structure schematic diagram of an embodiment of the electronic device in this application. As shown in FIG. 17, the electronic device 200 in this embodiment comprises any power supply system 100 mentioned above.

Wherein, the electronic device 200 can be a medical device, and be other electronic devices that require different voltage types and levels, with no more restrictions here.

The above content is only the embodiments in this application and constitutes no limitation to the scope of the patent in this application. Any equivalent structure or equivalent process transformation made by reference of the specification and accompanying drawings in this application, or direct or indirect application in other related technical fields are included in the protection scope of the patent of this application.

## Claims

1. A power supply system which is **characterized in that**, comprising
a rectifying circuit module which is connected with an external power supply to correct and rectify the AC current of the external power supply to form a DC current;
a DC connecting bus module which is connected with the rectifying circuit module to store the DC current and output a DC voltage; and
a voltage output circuit module which is connected with the DC connecting bus module to convert the DC voltage of the DC connecting bus module to at least any of a three-phase AC voltage, a single-phase AC voltage and a target DC voltage and output it.

2. A power supply system according to claim 1 which is **characterized in that** the DC connecting bus module comprises:
a DC connecting bus which is connected with the rectifying circuit module and the voltage output circuit module to store the DC current and output a DC voltage; and
an input interface of the external power supply which is connected with the DC connecting bus to connect with other external DC power supply.

3. A power supply system according to claim 1 which is **characterized in that** the rectifying circuit module comprises:
a three-phase power factor correction circuit to correct and rectify the AC current of the external power supply to form a DC current; and
a control circuit which is connected with the three-phase power factor correction circuit to realize the control of the three-phase power factor correction circuit by digital signal processing method.

4. A power supply system according to claim 1 which is **characterized in that** the voltage output circuit module comprises:
a three-phase AC voltage output module which is connected with the DC connecting bus module to convert the DC voltage to a three-phase AC voltage and output it;
a single-phase AC voltage output module which is connected with the DC connecting bus module to convert the DC voltage to a single-phase AC voltage and output it; and
a DC voltage output module which is connected with the DC connecting bus module to convert the DC voltage to a target DC voltage and output it.

5. A power supply system according to claim 4 which is **characterized in that** the DC connecting bus module comprises the first DC connecting bus, the second DC connecting bus and an input interface of the external power supply, and the rectifying circuit module comprises the first three-phase power factor correction circuit, the second three-phase power factor correction circuit and a control circuit;
The first three-phase power factor correction circuit is connected with the first DC connecting bus, and the three-phase AC voltage output module and the single-phase AC voltage output module are connected with the first DC connecting bus; the second three-phase power factor correction circuit is connected with the second DC connecting bus and the DC voltage output module is connected with the second DC connecting bus.

6. A power supply system according to claim 4 which is **characterized in that** the three-phase AC voltage output module comprises:
a three-phase DC to AC converter which is connected with the DC connecting bus to convert the DC voltage of the DC connecting bus to a three-phase AC voltage;
the first AC filter which is connected with the three-phase DC to AC converter to filter the three-phase AC voltage; and
a three-phase AC output circuit which is connected with the first AC filter to output the three-phase AC voltage.

7. A power supply system according to claim 4 which is **characterized in that** the single-phase AC voltage output module comprises:
a single-phase DC to AC converter which is connected with the DC connecting bus to convert the DC voltage of the DC connecting bus to a single-phase AC voltage;
the second AC filter which is connected with the single-phase DC to AC converter to filter the single-phase AC voltage; and
a single-phase AC output circuit which is connected with the second AC filter to output a single-phase AC voltage.

8. A power supply system according to claim 4 which is **characterized in that** the DC voltage output module comprises:
a DC to DC converter which is connected with the DC connecting bus to convert the DC voltage of the DC connecting bus to a target DC voltage;
a DC filter which is connected with the DC to DC converter to filter the target DC voltage; and
a DC output circuit which is connected with the DC filter to output the target DC voltage.

9. A power supply system according to claim 1 which is **characterized in that** the power supply system also comprises an AC input and protection circuit module which comprises:
an AC input sub-module which is connected with the external power supply to receive the AC input of the external power supply;
an isolation switch sub-module which is connected with the AC input sub-module to protect the power supply system to operate normally;
a surge protection sub-module which is connected with the isolation switch sub-module to prevent the damage caused by the surge voltage or current of the external power supply;
an electromagnetic interference sub-module which is connected with the surge protection sub-module to suppress electromagnetic interference; and
an input current limiting sub-module which is connected with the electromagnetic interference sub-module to limit the AC current of the external power supply.

10. A power supply system according to claim 1 which is **characterized in that** the power supply system also comprises a DC/DC HF isolation transformer module which is connected with the DC connecting bus module and the voltage output circuit module to regulate the DC voltage of the DC connecting bus module to the DC voltage level required by the voltage output circuit module.

11. A power supply system according to claim 10 which is **characterized in that** the power supply system also comprises an output monitoring module and a grounding failure protection module; the output monitoring module is connected with the DC/DC HF isolation transformer module to monitor the voltage and current outputted by the DC/DC HF isolation transformer module and the grounding failure protection module is connected with the voltage output circuit module to monitor the grounding failure of the DC voltage outputted by the voltage output circuit module.

12. A power supply system according to claim 1 which is **characterized in that** the power supply system also comprises a central protection and failure monitoring processing module which comprises:
a central management sub-module to monitor the status and safety of the power supply system in real time and quickly and accurately execute protection tasks in a failure; and
an external communication interface which is connected with the central management sub-module to realize the communication between the central management sub-module and the external device.

13. A power supply system according to claim 12 which is **characterized in that** the power supply system also comprises an internal auxiliary power module which is connected with the central management sub-module to provide a safe internal power guarantee to the central management sub-module.

14. An electronic device which is **characterized in that** it comprises any power supply system mentioned in claim 1 to 13.
